## Europäisches Patentamt
## European Patent Office
## Office européen des brevets

(19)

(11) Numéro de publication: **0 357 523**
**A1**

(12)

# DEMANDE DE BREVET EUROPEEN

(21) Numéro de dépôt: **89420307.4**

(22) Date de dépôt: **22.08.89**

(51) Int. Cl.⁵: **G 02 C 11/02**

(30) Priorité: **30.08.88 FR 8811563**

(43) Date de publication de la demande:
**07.03.90 Bulletin 90/10**

(84) Etats contractants désignés: **DE ES FR GB IT**

(71) Demandeur: **L'AMY S.A.**
**216 rue de la République**
**F-39400 Morez (FR)**

(72) Inventeur: **Lamy, Jacques**
**Les Buclets**
**F-39400 Morbier (FR)**

**Tireford, Michel**
**27 La Madone**
**F-39400 Morbier (FR)**

(74) Mandataire: **Moinas, Michel et al**
**Cabinet Michel Moinas 13 Chemin du Levant**
**F-01210 Ferney-Voltaire (FR)**

(54) **Façade décorative rapportée sur une monture de lunettes.**

(57) La façade décorative pour une monture de lunettes présente sur sa face intérieure une empriente (205,305) de la partie corrrespondante de la monture de lunetttes (100) qu'elle vient enrober. Le pourtour de cette empriente est garni de plusieurs griffes flexibles (510) permettant l'accrochage de la façade sur les tranches supérieures et inférieures de la partie correspondante de la lunette.

FIG 1

EP 0 357 523 A1

## Description

### FACADE DECORATIVE RAPPORTEE SUR UNE MONTURE DE LUNETTES

La présente invention est relative à la lunetterie et plus particulièrement à des façades décoratives rapportées de manière temporaire sur une monture de lunettes déjà utilisable en temps que telle pour en changer radicalement la forme et la couleur.

Compte-tenu des performances en confort d'usage des montures de lunettes sophistiquées et des verres ophtalmiques proposés sur le marché actuellement, on constate que les usagers préfèrent d'abord acquérir de telles lunettes plutôt chères avec une certqine esthtique pour éprouver par la suite un besoin de changement d'aspect selon les circonstances, voire leur humeur. La disposition d'un jeu de décorations s'adaptant et se retirant aisément sur la monture de base devient alors une alterntive avantageuse par rapport à l'achat d'une nouvelle paire de lunettes complète et de nombreuses solutions dans ce sens ont d'ores et déjà été proposées.

Les exposés FR 2 454 894 et EP 0 038 093 divulgueunt un fil drageoir pour cercle de monture de lunettes façonné de telle sorte qu'il présente un relief longitudinal permettant l'accrochage d'une galerie décorative séparée. Conçu essentiellement pour permettre une certaine flexibilité d'assemblage en usine de cercles de montures de couleurs variées, ce dispositif n'est guère prévu, de par la continuité de l'accrochage de la galerie, à un montage et démontage fréquent par un particulier.

L'exposé FR 2 220 802 présente une décoration supérieure en forme de U inversé s'encastrant dans des barrettes transversales rapportées à intervalles réguliers le long du pourtour du cercle drageoir. Surtout efficace pour des garnitures seulement supérieures, ce mode de fixation devient inapproprié pour une garniture entourant complètement le cercle drageoir car elle implique une déformation de cette décoration trop importante lors de l'enclenchement sur ces barrettes.

L'exposé FR 2 404 242 propose un mode de fixation de décorations par l'arrière du cercle drageoir grâce à une goupille horizontale pénétrant dans le bloc de fermeture du cercle drageoir et immobilisée en place par la avis verticale de fermeture de ce même bloc. Ce mode de fixation exige l'usage d'un petit tournevis de bijoutier guère possible par de nombreux particuliers. De plus, une telle fixation ne se fait qu'en des points limités notamment au niveau du bloc de fermeture du cercle drageoir et éventuellement au nieqau de la kiaison pont/cercle, ce qui peut apparaître comme insuffisant pour une décoration trop importante.

L'exposé US 4 070 103 décrit une paire de cadres circulaires rapportée sur le pourtour de chaque cercle drageoir d'une monture de lunettes métallique. La fixation de ces cadres sur les cercles drageours métalliques se fait essentiellemtn grâce à un ruban magnétique inserré dans la tranche intérieure des cadres. Mais il est bien connu que la magnétisation d'un aimant peut s'affaiblir abec le temps ou à l'approche d'un autre corps magnétique de polarité inverse. Ainsi, ce mode de fixation ne présente pas toute la fiabilité souhaitée pour unusage intensif de cadre décoratif.

Il est aussi fait mention, dans cet exposé, de la suppression possible de la bande magnétique pour ne laisser qu'une rainure le long de la tranche interne du cadre dans laquelle vient directement s'encastrer le cercle drageoir avec son verre. Là encore, un tel cadre avec sa rainure continue pose de nobreux problèmes pratiques. En effet, ce cadre est d'abord tout aussi difficile à monter sur le cercle que l'est un pneu sur une jante. compte-tenu de la faible dimension des constituants, l'usage d'outils, notamment de pinces, risque de provoquer plus de dégâts que souhaité. De plus, suite à de nombreux montages et démontages, il n'est pas exclu que ce cadre s'élargisse légèrement pour devenir à la longue certes plus facile à monter mais une fois en place plutôt instable. Enfin, la fabrication de ce cadre pose des problèmes de fabrication dus à une mauvaise répétabilité de la machine outil dans temps.

Le but de la présente invention est une façade décroative rapportée pour changer radicalement la forme et la couleur d'une monture de lunettes, façade qui soit facile à monter et démonter même par un orteur privé de ses lunettes opérant à tatons. De préférence, le dispositif de fixation déune telle façade décorative doit rester plutôt simle pour en augmenter la fiabilité et diminuer les coûts de production de l'ensemble. Enfin, la monture de base doit pouvoir être portée telle quelle sans qu'apparaîsse des artifices de montage.

Ces buts sont réasilés grâce à une façade décorative pésentant sur sa face intérieure une empreinte de la partie correspondante de la monture de lunettes qu'elle vient enrober, le pourtour de la dite empreinte étant garni de plusieurs griffes flexibles permettant l'acrochage de la façade sur les tranches supérieures et inférieures de la partie correrspondante de la lunette.

De préférence, la matière constituant les griffes d'accrochage possède un coefficient d'élasticité E compris entre 1 et 2 GPa et un coefficient de friction matière/matière de monture inférieur ou égal à 0,5.

Avangateusement, les griffes d'accrochage peuvent être rapportées sur le pourtour de l'empreinte de la façade par collage ou soudure. Si la façade est en matière plastique, ces griffes d'accrouchage peuvent soit être moulées d'une seule pièce avec cette façade, soit se présenter sous la forme d'inserts métalliques partiellement pris dans la façade lors de son moulage.

Utilement, les griffes d'accrochage sont arrangées sur le pourtour de l'empreinte de la façade en plusieurs paires verticales. Dans le cas particulier d'une façade décorative enrobant d'un bloc le pont, les duex cercles drageoirs et le tenon de chaque cercle, duex cercles drageoirs et le tenon de chaque cercle, quatre paires verticales de griffes d'accrochage au moins sont arrangées sur le pourtour de l'empreinte de la façade : une au niveau de chacune des deux liaisons pont/cercle et une au niveau de chacun des tenons. Dans. le cas d'une faàade décorative n'enrobant que le pont et les deux cercles drageoirs, quatre paires verticales de griffes d'accrochage au moins sont arrangées : soit une au niveau de chacune des deux liaisons pont/cercle et une au niveau du quart de la largeur de chaque cercle en partant de l'extrémité côté branche ; soit au quart et au trois-quart de la largeur de chaque cercle.

Une amélioration d'un telle façade frontale peut consister en ce que les cercles enrobant les cercles drageoirs de la monture soient ouverts au niveau du pont et/ou des tenons, les bords respectifs de ces ouvertures étant reliés par des moyens de rappel.

Comme on peut facilement le comprendre, la façade décorative selon l'invention est toute particulièrement intéressante dand la mesure où les griffes ont soit la forme d'un parallélépidède que termine une barrette dont la seciton a, vu en coupe verticale, la forme d'un losange ; soit la forme d'un tronc que termine une boule, soit la forme d'une languette repliée vers l'intérieur et arrondie en son extrémité.

L'invention est décrite ci-après de façon plus détaillée à l'aide d'exemples d'exécution, sand caractère limitatif, illustrés aux dessins annexés dans lesquels :

    - la figure 1 est une vue en perspective d'une monture de lunettes métallique, d'une façade décroative pour une branche et d'une façade frontale décorative,
    - les figures 2a à 2d présentent, vu en prespective, quatre formes différentes de réalisation de griffes d'accrochage.

Dans la présente description, on entend part face intérieure une face orientée vers le visage du porteur de lunettes.

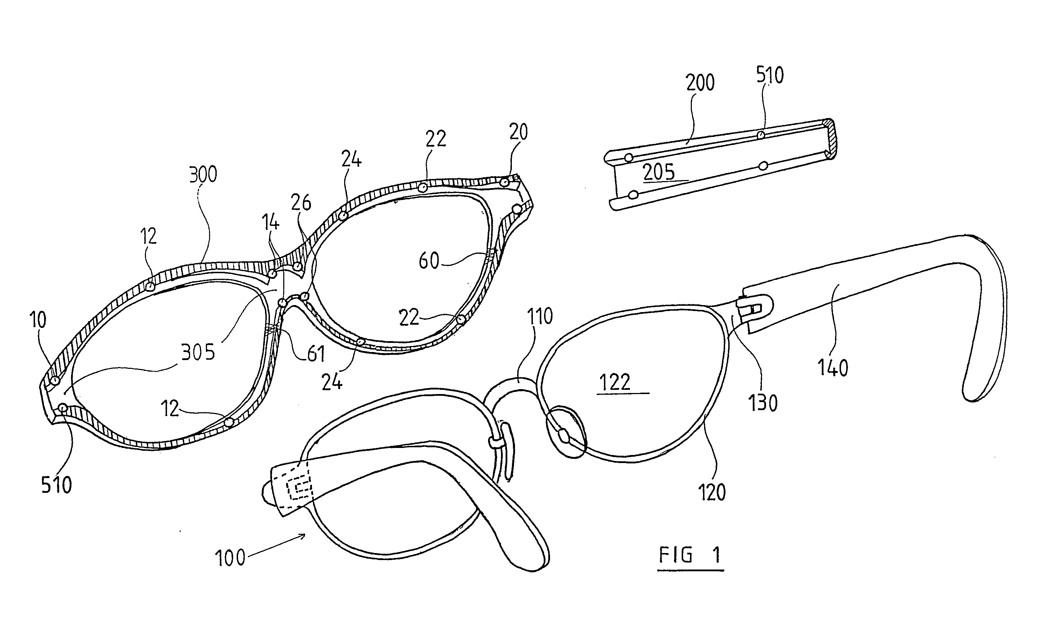

Sur la figure 1 est repréesntée, vu en perspective de l'arrière, une monture de lunettes tenant deux verres correcteurs 122 dans les cercles drageoirs 120 eu -mêmes reliés par un pont 110. Chaque cercle drageoir est complété à l'extrémté opposée au pont par un tenon 130 auquel est relié une branche de lunettes 140 par des moyens useuls telles que charnières. Deux façades décoratives sont aussi représentées en perspective vu de leur face intérieure à savoir une façade décorative 200 pour la branche 140 et une façade frontale décorative 300.

La façade 200 telle que représentée a une forme générale identique à l'élement de la branche 140 si ce n'est que ses dimensions sont supérieures de l'ordre de 1 à 2 mm. Cetter façade 200 présente aussi, sur sa face intérieure, une empreinte 205 en correspondance rigoureuse avec l'élément de la branche 140. Le pourtour de cette empreinte 205 est muni de quatre griffes d'accrochage 510 dont les formes possibles seront décrites par la suite. En fait, la forme générale de cette façade 200 peut être libre : en arc-de-cercle ou ondulée ou une partie avant se rétrécissant vers l'arrière, la seule conditon étant que le volume soit suffisant pour que puisse figurer cette empreinte 205 sur la face intérieure. La couleur, notamment sur la face extérieur, de cette façade 200 est tout-à-tfait libre au choix du modelliste.

L façade frontale 300 a une forme générale correspondant à deux cercles de monture de lunettes reliés par un pont. La face intérieure de cettre façade 300 présente une empreinte 305 correspondant rigoureusement au pourtour de pont 110, cercle drageoir 120 et tenons 130 de la monture de lunettes 100. La forme et la couleur de la face extérieure et du pourtour externe de cette façade frontale 300 ainsi que du pourtour interne de chacun des cercles sont absolument libres au choix du modelliste. Comme l'empreinte 205, le pourtour de l'empreinte 305 est garni de griffres d'accrochage de référence générale 510.

La nombre et la disposition de ces griffes d'accrochage pour chacune des façades dépend du poids de la façade même, de la forme du pourtour de l'empreinte correspondante ainsi que du type, donc de l'efficacité, de la griffe choisie. Ces griffes sont disposées de préférence par paires verticales, c'est-à-dire aux deux intersections du pourtour abec un plan vertical, pour créer un effet de clipsage.

Dans le case de la façade 200 enrobant l'élément de la branche de lunettes 140, deux paires de griffes 510 situées au tiers et au deux-tiers de la longueur suffisent si cette façade est légère. Si cette façade 200 est plus lourde, trois paires au moins sont disposées au quart, moitié et trois-quart de la longueur respectivement.

Dans le cas d'une façade frontale 300, plusieurs dispositions de paires de griffes sont possibles selon que cette façade enrobe ou non les tenons 130. Cette façade 300 étant symétrique par rapport à un plan vertical passant par le pont, la disposition de ces paires de griffes peut elle aussi être symétrique par rapport à ce même plan.

Dans le cas d'une façade frontale 300 plutôt légère et enrobant les tenons 130, on dispose de préférence seulement deux paires de griffes par cercles : une première paire 10 de griffes clipsant autour du tenon 130 et une seconde paire 14 clipsant autour du pont 110 proche de sa liaison avec le cercle drageoir 120. Si cette façade est plus lourde et/ou plus volumineuse, on complète alors chaque cercle par une paire de griffes supplémentaire 12 au milieu de ce cercle.

Si l'enrobage du tenon 130 est absent et que cette façade est légère, on ne dispose toujours que deux paires de griffes, notamment une première paire 26 autour du pont 110 proche de la liaison avec le cercle drageoir 120 et une seconde paire 22 située environ au quart du cercle en partant du côté branche. A nouveau, si une telle façade se révèle trop volumineuse et/ou trop lourde, on complète la disposition précédente par une paire de griffes supplémentaire 24 située au trois-quart de la largeur du cercle en partant du côté branche. Enfin, si pour des questions de volumes ou d'esthétique, il s'avère impossible de disposer une paire de griffes se clipsant sur le pont 110, il convient alors de disposer deux paires de griffes par cercle au tiers et au deuxtiers de la largeur ou, dans le cas extrême, trois paires de griffes 22,12 et 24 respectivement au quart, à la moitié et aux trois-quart de la largeur du cercle.

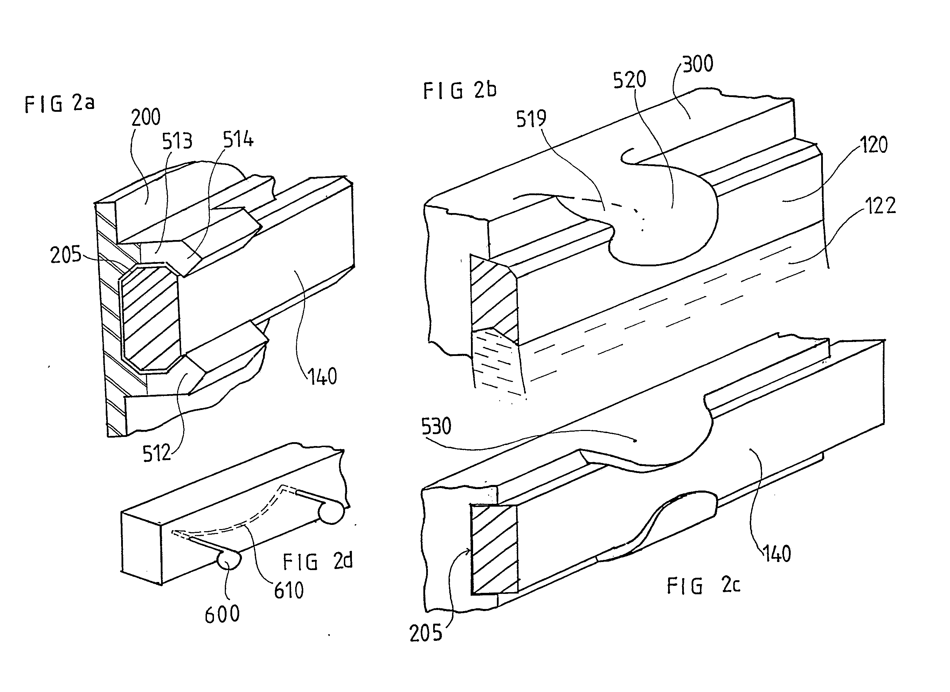

Les figures 2a à 2c illustrent plusieurs formes de griffes possibles selon la forme de la tranche supérieure de la partie de la monture de lunettes venant en correspondance, selon la force d'accrochage souhaitée et selon les contaraintes esthétiques imposées.

La figure 2a illustre une paire de griffes 512 clipsant une façade décorative 200 sur l'élément 140 d'une branche de lunettes, étant bien entendu que cette forme particulière de griffes peut aussi être utilisée sur le poutour de la face frontale 300. Cette griffe 512 se présente sous la forme d'une avancée parallélépédique 513 que termine une brarrette 514 horizontale dont la section a, vu en coupe verticale, la forme d'un losange. L'avancée 513 complète d'abord la profondeur de l'empreinte 205 de telle sorte que la barrette 514 se situe au bord intérieur de la tranche de la partie de la monture à enrober. Cette avancée 513 assure aussi à la griffre 512 une certaine flexibilité permettant aux barrettes suérieures et inférieures 514 de légèrement s'écarter lors de l'enchlenchement ou désenclenchement de la façade sur la monture. Ce type de griffe trouve tout son avantage lorsque la tranche supérieure de la partie de la monture est chanfreinée aux deux bords intérieur et extérieur. Dans ce cas, lors de la présentation de la façade contre la monture, les faces changerinées prennent appui contre les faces obliques de la barrette 514 et une simple poussée transversale force aisément l'écartement des deux barrettes 514 facilitant l'enclenchement. Une action similaire se produit lors du désenclenchement de la face décorative 200.

La figure 2b illustre une autre griffe d'accrochage ayant la forme d'un tronc 519 que termine une boule 520 retenant une façade frontale 300 contre un cercle drageoir 120. Comme précédemment, le tronc 519 est d'abord là pour compléter la profondeur de l'empreinte 305 de telle sorte que la boule 520 se trouve juste au niveau du bord intérieur du cercle drageoir 120. Ce tronc 519 permet aussi, de par sl flexibilité, un certain dàbattement vertical de la boule 520 nécessaire lors du clipsage de la façade 300 sur le cercle drageoir 120. L'avantage d'une telle griffe vient du fait que la façade 300 peut être présentée obliquement par rapport à la partie corespondante de la monture de lunettes, l'écartement vertical s'effectuant toujours de la même manière.

En référence à la figurte 2c, la griffe 530 a la forme d'une languette repliée vers l'intérieur et arrondie en son extrémité. Esthétiquement plus discrète et d'un maintien méchanique tout aussi fort si ce n'est plus que les griffes décrites précédemment, cette griffe 530 est toutefois plus difficile à enclencher du fait qu'il faut la lever avec l'ongle ou un tournevis pour la passer pas dessus la tranche de la partie correrspondante de la monture de lunettes. Toutefois, de par son extrémité arrondie, le désengagement de cette griffe est aisé.

Dans tous les cas de figurres, des conditions satisfaisantes de clipsage et de tenu de la pièce clipsée sont réalisées par un choix judicieux des dimensions et de la matière du clips selon les règles de physique habituelles. En effet, lors de l'engagement d'une griffe par desus la tranche de l'élément à enrober, deux phenomènes interviennetn simultanément : un glissement avec frottement de la griffe sur l'élément dixe et und déformationimprimée par cet élément sur la griffe pour "l'ouvrir".

On vérifie par les lois de mécanique rerlatives au frottement, et ce en négligeant le poids de la griffe même, que pour qu'un glissement avec frottement s'effectue, l'angle d'addaque de la griffe contre l'élément fixe, soit de la barrette 514 contre la face 205 dans le cas de la figure 2a, doit être supérieur à l'angle $p_o$ défini par le coefficient de frottement matière/matière $\gamma_o$ - $tgp_o$ tel que lu sur des tables ou mesuré. On constte qu'un faible coefficient $\gamma_o$ facilitera le montage lorsque l'angle d'attaque est luimême faible et par conséquent esthétiquement discret.

En référence aux lois de la résistance des matériaux, notamment celles relatives aux poutres encastrées, on détermine que la force minimum nécessaire pour "lever" la griffe d'un écartement dé[end du module d'élasticité E du matérriau sélectionné pour la griffe ainsi que de la longueur et du moment d'inertie (lui-même fonction des dimensions de la section) de l'avancée 513 ou tronc 519.

Suite a de nombreux essais en laboratoire, il a été établi que des matériaux présentant un module d'élasticité E compris entre 1 et 2 GPa etun coefficient de friction $\gamma$ inférieur ou égal à 0,5 permettent la réalisation de griffes discrètes, facilement engageables et assurant un maintien efficace.

Bien entendu, le matériau retenu doit être tel que ses caractéristiques méchaniques ne soient pas altérées par fatigue deu aux sollicitaitons alternées issues de mongages fréquents, ni par asure ou agressions chimiques provenant du port de la monture.

On peut ainsi utiliser les matières plastiques tels que polyamides ou polyoléfines et en particulier polypropylène ou polyéthylène, en prenant garde toute fois que la qualité du plastique choisei présente en plus une bonne résistance au fluage, à l'action des ultra-violets, ainsi qu'une bonne tenue à la sueur ou produits cosmétiques ou produits d'enteretien.

Si la façade décorative est elle-même en cette même matière plastique, la façade et les griffes peuvent être moulées d'un seul tenant. Si pour des exigences esthétiques la façade doit être moulée en une autre matière plastique, ces griffes peuvent dans ce cas être rapportées par collage grâce à des colles spéciales plastique/plastique ou par soudure à chaud ou par ultrasons.

Ces griffes peuvent aussi se présenter sous la forme d'inserts métalliques qui, lors du moulage de la façade décorative en matière plastique, sont maintenus dans le moule de telle sorte qu'une queue d'accorchage soit prise dans la masse. Tel que représenté sur la figure 2d, deux ou plusieures geiffes 600 qui est lui reliées ensemble par un fil métallique 610 qui est lui pris dans la masse de la façáde décorative. Une telle assosication de griffes métalliques assure un eplus grand flexibilité et une moindre fatigue dans le temps.

Dans le cas d'une face frontale décorative 300 telle que représentée sur la figure 1, on peut aussi envisager une ou plusieurs ouvertures du cercle décoratif enrobant un cercle drageour 120 : soit une ouverture 60 proche du tenon 130, soit une ouverture 61 proche du pont 110. Les bords respectifs de ces ouvertures sont alors reliés par un moyen de rappel qui peut être un ressort méchanique ou, si la face 300 est moulée en plastique, un pont de matière élastomère ou de plastique souple comoulé. Un tel dispositif permet d'agrandir aisément un cercle décoratif pour le passer par dessus le cercle drageoir 120 correspondant.

Grâce à telles façades décoratives, il devient possible à d'excellente qualité quant au méchanisme de planquettes et porte-plaquettes, charnières élastiques, chrochets de branche, verres ophtalmiques ; et de disposer d'un ou plusieurs jeux d'accessoires ornementaux permettant de transformer radicalement l'aspect extérieur de la paire de lunettes. Ainsi, une monture de lunettes métallique dorée de style "classique" agréable à porter au travail peut se transformer en une monture de lunettes style "bois" pour la chasse ou en une monture de type "moderne" pour sortir le soir. Pour ce, il suffit de présenter la face frontale 300 correspondante face à la monture de lunettes 100 et de clipser cetter façade, paire de griffes par paire de griffes en partant d'un extrémité, la droite par exemple, pour progresser au fur et à mesure vers l'autre extrtémité.

Initialement conçu pour une monture de lunettes de base métallique, il est évident que la présente invention s'applique à toute autre monture de lunettes en plastique ou autre matériau tel que carbone dans la mesure où cette monture de base est relativement fine.

De nombreuses améliorations peuvent être apportées à ces façades décoratives dand le casre de cette invention.

## Revendications

1. Façade décorative rapportée sur une monture de lunettes caractérisée en ce que la façade (200,300) présente sur sa face intérieure une empreinte (205,305) de la partie correrspondante de la monture de lunettes (100) qu'elle vient enrober, le pourtour de la dite empreiente étant garni de plusieures griffes flexibles (510) permettant l'accrochage de la façade sur les tranches supérieures et inférieures de la partie correspondante de la lunette.

2. Façade fécorative selon la revendication 1, caractérisée en ce que la matière constituant les griffes d'accrochage (510) possède un coefficient d'élasticité E compris entre 1 et 2 GPa et un coefficient de friction matière/matière de monture inférieur ou égal à 0,5.

3. Façade décorative selon la revendiation 1, caractérisée en ce que les griffes d'accrochage (510) sont raapportées sur le pourtour de l'empreinte de la façade (200,300) par colage ou soudure.

4. Façade décorative selon la revendication 1, caractérisée en ce que la façade (200,300) et les griffes (510) d'accrochage sont moulées d'une seule pièce en matière plastique.

5. Façade décorative selon la revendiation 1, caractérisée en ce que les griffes d'accorchage (510) sont des inserts métalliques partiellement pris dans la façade décorative en matière plastique lors de son moulage.

6. Façade décorative selon la revendiation 1, caractérisée en ce que les griffes (510) d'accrochage sont arrangées en plusieurs paires verticales sur le pourtour de l'empreinte de la façade.

7. Façade décorative selon la revendiation 6 enrobant d'un bloc le pont , les deux cercles drageoirs et les tenons d'une monture de lunettes, caractérisée en ce qu'au minimum quatre paires verticales de griffes d'accrochage sont arrangées sur le pourtour de l'empreinte de la façade : une au niveau de chacune des deux liasisons pont/cercle (14,26) et une au niveau de chacun des tenons (10,20).

8. Façade décorative selon la revendiation 6 enrobant d'un bloc le pont et les deux cercles drageoirs d'une monture de lunettes, caractérisée en ce qu'au minimum quatre paires verticales de griffes d'accrochage sont arrangées sur le pourtour de l'empreinte de la façade : une au niveau de chacune des deux liaisons pont/cercle (14,26) etune (12) au niveau de quart de la largeur de chaque cercle en partant de l'extrémité coté branche.

9. Façade décorative selon la revendication 6 enrobant d'un bloc le pont et les deux cercles drageoirs d'une monture de lunettes, caractérisée en ce qu'au minimum quatre paires verticales de griffes d'accrochage sont arangées sur le pourtour de l'empreinte de la façade : au quart (22) et au trois-quart (24) de la largeur de chaque cercle.

10. Façade frontale selon la revendication 6, caractérisée en ce que les cercles de la façade enrobant les cercles drageoirs de la monture sont ouverts au niveau du pont et/ou des tenons, les bords respectifs de ces ouvertures étant reliés par des moyens de rappel.

11. Façade décorative selon la revendiation 1, caractérisée en ce que l'une au moins des griffes (512) d'accrochage a la forme d'une parallélépède (513) que termine une barrette (514) dont la seciton a, vu en coupe verticale, la forme d'un losange.

12. Façade décorative selon la revendication 1, caractérisée en ce que l'une au moins des griffes d'accrochage a la forme d'un tronc (519) terminé par une boule (520).

13. Façade décorative selon la revendication 1, caractérisée en ce que l'une au moins des griffes (530) d'accrochage a la forme d'une languette repliée vers l'intérieur et arrondie en son extrémité.

FIG 1

FIG 2a

200

513 514

205

512

140

FIG 2b

519 520 300

120

122

530

205

140

FIG 2c

FIG 2d

600 610

EP 0 357 523 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 605 422 (ETABLISSEMENTS VICTOR GROS) * Page 1, lignes 33-39, page 2, lignes 1-37 * | 1 | G 02 C 11/02 |
| Y | FR-A-1 528 354 (OCCHIALCHROM) * Page 2, colonne de gauche: dernier paragraphe, colonne de droite * | 1 | |
| A | FR-A-2 064 578 (H. JULLIEN & CIE) * Page 1, ligne 36 - page 2, ligne 5 * | 1 | |
| A | FR-A-1 525 270 (J.G. POULAIN) * Page 2, colonne de gauche, (26 à la fin), colonne de droite * | 1 | |
| A | FR-A-1 263 066 (BLANDCROFT) * Résumé * | 1 | |
| A | FR-A-1 113 921 (AMERICAN OPTICAL CO.) | | **DOMAINES TECHNIQUES RECHERCHES (Int. Cl.5)** |
| D,A | EP-A-0 038 093 (LAMY & FILS) | | G 02 C 11/02 G 02 C 9/04 |

Le présent rapport a été établi pour toutes les revendications

| Lieu de la recherche | Date d'achèvement de la recherche | Examinateur |
|---|---|---|
| LA HAYE | 27-11-1989 | CALLEWAERT-HAEZEBROUCK H |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.......................................................
& : membre de la même famille, document correspondant

EPO FORM 1503 03.82 (P0402)